# EUROPÄISCHE PATENTANMELDUNG

(11) **EP 3 144 999 A1**
(43) Veröffentlichungstag der Anmeldung: **22.03.2017**
(21) Anmeldenummer: 16195852.5
(22) Anmeldetag: 18.07.2012
(51) Int. Cl.: H01M 4/06, H01M 4/24, H01M 4/42, H01M 4/62, H01M 2/02, H01M 4/36, H01M 4/48, H01M 4/58, H01M 4/90, H01M 6/04, H01M 12/06

(54) **VERWENDUNG ELEKTROCHEMISCHER ZELLEN MIT EINER ELEKTRODE AUS ZINK ODER AUS EINER ZINKLEGIERUNG UND EINEM ANTEIL AN ALUMINIUMHYDROXID UND/ODER AN MINDESTENS EINEM ALUMINAT**

(62) Teilanmeldung aus: 12176884.0
(71) Anmelder: VARTA Microbattery GmbH, 73479 Ellwangen (DE)
(72) Erfinder: Csrenko, Cornelia, 73433 Aalen (DE); Kohls, Ulrich, 73460 Hüttlingen (DE); Kreidler, Bernd, 73479 Ellwangen (DE); Löffelmann, Hermann, 73479 Ellwangen (DE); Rupp, Andreas, 73565 Spraitbach (DE)
(74) Vertreter: Patentanwaltskanzlei Cartagena

(57) **Zusammenfassung**

Eine elektrochemische Zelle umfasst eine Elektrode, die sich im Wesentlichen aus Zink oder aus einer Zinklegierung zusammensetzt und einen Anteil an Aluminiumhydroxid und/oder an mindestens einem Aluminat aufweist. Die Zelle eignet sich hervorragend zur Versorgung eines im Pulsbetrieb betriebenen elektronischen Geräts mit elektrischer Energie.

## Beschreibung

Die nachfolgend beschriebene Erfindung betrifft die Verwendung elektrochemischer Zellen mit einer Elektrode aus Zink oder aus einer Zinklegierung und einem Anteil an Aluminiumhydroxid und/oder an mindestens einem Aluminat.

Elektrochemische Zellen mit einer Elektrode aus Zink oder aus einer Zinklegierung (kurz: Zinkelektrode) finden vielseitige Anwendung. Zink-Elektroden sind Bestandteil von Zink-Luft-Zellen, die in Knopfzellenform insbesondere im Hörgerätebereich benötigt werden. Weitere Beispiele für Zellen mit Zinkanode sind Zink-Manganoxid-Zellen, Zink-Silberoxid-Zellen und von Zink-Quecksilberoxid-Zellen. All diese Zellen zeichnen sich durch einen hohen Energiegehalt und eine relativ stabile Spannungslage aus.

Elektroden aus Zink kommen weiterhin auch in Gaserzeugerzellen zum Einsatz. Ein Beispiel einer Gaserzeugerzelle ist in der DE 35 32 335 A1 beschrieben.

Der vorliegenden Erfindung lag die Aufgabe zugrunde, elektrochemische Zellen mit einer Zinkelektrode bereit zu stellen, die sich durch ein besonders stabiles Spannungsprofil, insbesondere bei gepulster Entladung, auszeichnen. Mit den nachfolgend beschriebenen Zellen ist diese Aufgabe zu lösen.

Gegenstand der vorliegenden Erfindung sind die Verwendung mit den Merkmalen des Anspruchs 1 sowie das Verfahren mit den Merkmalen des Anspruchs 2. Bevorzugte Ausführungsformen der erfindungsgemäßen Verwendung und des erfindungsgemäßen Verfahrens sind in den abhängigen Ansprüchen 3 bis 8 angegeben. Der Wortlaut sämtlicher Ansprüche wird hiermit durch Bezugnahme zum Inhalt der vorliegenden Beschreibung gemacht.

Überraschenderweise wurde gefunden, dass sich die gestellte Aufgabe durch die Verwendung von elektrochemische Zellen, insbesondere solchen in Knopfzellenform, lösen lässt, die eine Elektrode aufweisen, die sich im Wesentlichen aus Zink- oder aus einer Zinklegierung zusammensetzt und der Aluminiumhydroxid zugesetzt ist. Im Rahmen des erfindungsgemäßen Verfahrens verwendete elektrochemische Zellen enthalten mindestens eine Elektrode, die sich im Wesentlichen aus Zink oder aus einer Zinklegierung zusammensetzt und die einen Anteil an Aluminiumhydroxid und/oder an mindestens einem Aluminat aufweist.

Bei Aluminiumhydroxid handelt es sich bekanntlich um einen bei Raumtemperatur festen Stoff von üblicherweise weißer Färbung, der in Wasser grundsätzlich schlecht löslich bis unlöslich ist. Aluminiumhydroxid existiert in mehreren Modifikationen. Erfindungsgemäß lassen sich sowohl die bekannten Modifikationen von Aluminiumorthohydroxid Al(OH)₃ (γ-Aluminium, β-Aluminiumhydroxid und triklines Aluminiumhydroxid) einsetzen als auch bekannte Modifikationen von Aluminiummetahydroxid AlO(OH), nämlich orthorhombisches α-Aluminiumoxidhydroxid und orthorhombisches γ-Aluminiumoxidhydroxid.

Alle diese Modifikationen reagieren unter Einfluss von Basen zu Aluminaten, in denen Aluminium in Form eines komplexen Anions [Al(OH)₄]- mit Hydroxidionen als Liganden vorliegt.

Wahlweise ist es möglich, dass die Zinkelektroden an Stelle des Aluminiumhydroxids oder zusätzlich zu diesem einen Anteil an mindestens einem Aluminat enthalten. In Frage kommen hierfür insbesondere als Aluminate Alkalialuminate wie Natriumaluminat oder Kaliumaluminat, Erdalkalialuminate wie Calziumaluminat sowie Zinkaluminat. Diese können separat oder in Kombination miteinander in der negativen Elektrode einer erfindungsgemäß verwendeten elektrochemischen Zelle vorliegen.

Es ist bevorzugt, dass die Elektrode neben dem Zink oder der Zinklegierung sowie dem Aluminiumhydroxid und/oder dem mindestens einem Aluminat eine oder mehrere weitere Komponenten enthält.

Insbesondere ist es bevorzugt, dass die Elektrode einen Elektrodenbinder aufweist. Bei der Wahl des Elektrodenbinders kann auf kommerziell erhältliche Produkte zurückgegriffen werden. Dem Fachmann ist bekannt, welche Elektrodenbinderfür elektrochemische Zellen mit Zinkelektroden geeignet sind.

Besonders bevorzugt kommt vorliegend ein Binder auf Basis von Carboxymethylcellulose und/oder auf Basis eines Carboxymethylcellulose-Derivats zum Einsatz. Alternativ können auch Binder auf Basis von Polyacrylsäuren verwendet werden.

Als weitere zusätzliche Komponente kann die Elektrode ein leitfähigkeitsverbesserndes Additiv enthalten. Hierbei kann es sich beispielsweise um ein kohlenstoffbasiertes Leitmittel handeln, beispielsweise um Ruß, Graphit oder Kohlenstoffnanoröhrchen (CNTs). Zusätzlich oder an Stelle des kohlenstoffbasierten Leitmittels kann auch ein alternatives Leitmittel, beispielsweise partikuläres Kupfer, verwendet werden.

Gegebenenfalls weist die Elektrode einen Korrosionsinhibitor auf. Unter einem Korrosionsinhibitor soll vorliegend ein Additiv verstanden werden, dass der Selbstkorrosion des in der Elektrode enthaltenen Zinks entgegenwirkt, welche wiederum eine unerwünschte Wasserstoffbildung zur Folge haben kann. Klassisch wurde in Zinkelektroden zu diesem Zweck häufig metallisches Quecksilber verwendet. Dieses wurde aus Umweltschutzgründen in den vergangenen Jahren jedoch durch Ersatzadditive, beispielsweise durch Indium und Bismuth, verdrängt.

Besonders bevorzugt weist die Elektrode die folgenden Komponenten in den folgenden Anteilen auf:
- das Zink und/oder die Zinklegierung in einem Anteil zwischen 90 Gew.-% und 99,5 Gew.-%, bevorzugt zwischen 95 Gew.-% und 99,5 Gew.-%, insbesondere zwischen 97,5 Gew.-% und 99,5 Gew.-
- das Aluminiumhydroxid und/oder das mindestens eine Aluminat in einem Anteil zwischen 0,01 Gew.-% und 10 Gew.-%, bevorzugt zwischen 0,01 Gew.-% und 5 Gew.-%, besonders bevorzugt zwischen 0,25 Gew.-% und 5 Gew.-%, insbesondere zwischen 0,5 Gew.-% und 2 Gew.-%,
- der Elektrodenbinder in einem Anteil zwischen 0 Gew.-% und 10 Gew.-%, bevorzugt zwischen 0,1 Gew.-% und 5 Gew.-%, insbesondere zwischen 0,25 Gew.-% und 2,5 Gew.-%,
- das leitfähigkeitsverbessernde Additiv in einem Anteil zwischen 0 Gew.-% und 10 Gew.-%, bevorzugt zwischen 0,25 Gew.-% und 5 Gew.-%, insbesondere zwischen 0,25 Gew.-% und 2,5 Gew.-%,
- den Korrosionsinhibitor in einem Anteil zwischen 0 Gew.-% und 10 Gew.-%, bevorzugt zwischen 0,1 Gew.-% und 5 Gew.-%, insbesondere zwischen 0,25 Gew.-% und 2,5 Gew.-%.

Hierbei ist zu beachten, dass in der Elektrode die genannten Anteile derart aufeinander abgestimmt sind, dass sie sich insgesamt zu 100 Gew.-% aufsummieren. Weiterhin ist hervorzuheben, dass sich alle Gewichtsangaben auf das Trockengewicht der Elektrode beziehen, also ohne Berücksichtigung eines Elektrolyten, mit dem die Elektrode gegebenenfalls getränkt ist.

Hervorzuheben ist weiterhin, dass es sich insbesondere bei dem leitfähigkeitsverbessernden Additiv und dem Korrosionsinhibitor um rein fakultative Merkmale der erfindungsgemäßen Zelle handelt.

Besonders bevorzugt weist die verwendete Zelle einen alkalischen Elektrolyten auf. Gängige alkalische Elektrolyten sind beispielsweise wässrige Natriumhydroxid- oder Kaliumhydroxid-Lösungen.

Im Lichte der obigen Ausführungen zum chemischen Einfluss von Basen auf Aluminiumhydroxid ist klar, dass bei Anwesenheit eines alkalischen Elektrolyten in einer im Rahmen der vorliegenden Erfindung verwendeten Zelle enthaltenes Aluminiumhydroxid mindestens teilweise in ein oder mehrere Aluminate umgewandelt wird. So können sich beispielsweise unter dem Einfluss von Kallauge als Base in einer Zink und Aluminiumhydroxid enthaltenden Elektrode gleichzeitig Kalium- und Zinkaluminate bilden.

Bei der sich im Wesentlichen aus Zink oder aus einer Zinklegierung zusammensetzenden, einen Anteil an Aluminiumhydroxid und/oder an mindestens einem Aluminat aufweisenden Elektrode handelt es sich in der Regel um die negative Elektrode der verwendeten Zelle.

In besonders bevorzugten Ausführungsformen weist die verwendete Zelle eine Luftkathode, eine Silberoxidkathode, eine Quecksilberoxidkathode oder eine Manganoxidkathode auf. Es handelt sich entsprechend bei der Zelle bevorzugt um eine Zink-Luft-Zelle, eine Zink-Silberoxid-Zelle, eine Quecksilberoxid-Zink-Zelle oder eine Zink-Manganoxid-Zelle. Der Aufbau all dieser Zelltypen ist dem Fachmann bekannt und bedarf vorliegend keiner detaillierten Erläuterung.

Die verwendete Zelle kann auch eine Wasserstoffkathode umfassen, wie sie beispielsweise in der DE 35 32 335 C2 beschrieben ist. Bei der verwendeten Zelle kann es sich also auch um eine Gaserzeugerzelle, insbesondere eine Wasserstofferzeugungszelle, handeln.

Besonders bevorzugt handelt es sich bei der verwendeten Zelle um eine Knopfzelle.

Zur Herstellung der beschriebenen Elektrode werden ein Zinkpulver oder ein zinkhaltiges Pulver (aus einer Zinklegierung) mit Aluminiumhydroxid (alternativ: Zusätzlich oder an Stelle des Aluminiumhydroxids mit einem Aluminat) gemischt. Gegebenenfalls können der erwähnte Elektrodenbinder und/oder das leitfähigkeitsverbessernde Additiv und/oder der Korrosionsinhibitor zugesetzt werden.

Die entstehende Mischung kann anschließend zu einem Formkörper gepresst und als Elektrode in ein Gehäuse eingesetzt werden. Alternativ ist es auch möglich, die Mischung pulverförmig in ein Gehäuse einzubringen (einzurieseln). Diese Variante ist insbesondere bei der Herstellung von Zink/Luft-Zellen bevorzugt.

In der Regel wird die negative Elektrode mit einem alkalischen Elektrolyten versetzt, nachdem sie in das genannte Gehäuse eingebracht wurde Anschließend kann das Gehäuse flüssigkeitsdicht verschlossen werden.

Es ist aber auch möglich, die Mischung außerhalb des Gehäuses mit dem Elektrolyten zu versetzen und als Paste in das Gehäuse einzubringen.

Weitere Merkmale und auch Vorteile der vorliegenden Erfindung ergeben sich aus der nun folgenden Beschreibung eines Ausführungsbeispiels. Einzelne der oben oder in den Ansprüchen beschriebenen Merkmale können dabei jeweils für sich oder zu mehreren in Kombination miteinander bei einer Ausführungsform der Erfindung verwirklicht sein. Die Ausführungsbeispiele dienen lediglich zur Erläuterung und zum besseren Verständnis der Erfindung und sind in keiner Weise einschränkend zu verstehen.

### Ausführungsbeispiel

Aus Zinkpulver, Aluminiumhydroxid und Carboxymethylcellulose als Elektrodenbinder wurden Elektroden für Zink-Luft-Zellen, Zink-Silberoxid-Zellen und Wasserstofferzeugerzellen hergestellt. Hierzu wurden die genannten Elektrodenbestandteile in den folgenden Verhältnissen miteinander gemischt:

| | Zink/Luft | Zink/Ag₂O | Zink-H₂ |
|---|---|---|---|
| Elektrodenbinder | 0,3 Gew.-% | 1,0 Gew.-% | 1,5 Gew.-% |
| Al(OH)₃ | 0,5 Gew.-% | 1,0 Gew.-% | 0,5 Gew.-% |
| Zink-Pulver | 99,2 Gew.-% | 98,0 Gew.-% | 98,0 Gew.-% |

Die Mischungfür die Zink-Silberoxid-Zelle wurden zu einer tablettenförmigen Elektrode verpresst und als negative Elektrode in einem handelsüblichen Knopfzellengehäuse verbaut.

Die Mischungen für die Zink-Luft- und die Wasserstofferzeugerzellen wurden in trockener Form in einen Knopfzellendeckel eingerieselt. Dieser wurde anschließend mit einem Becher kombiniert, der Ein- bzw. Austrittsöffnungen für Luftsauerstoff und Wasserstoff aufwies.

Vor dem Schließen der Gehäuse wurden die hergestellten Elektroden jeweils mit 30%-iger Kaliumhydroxid-Lösung getränkt.

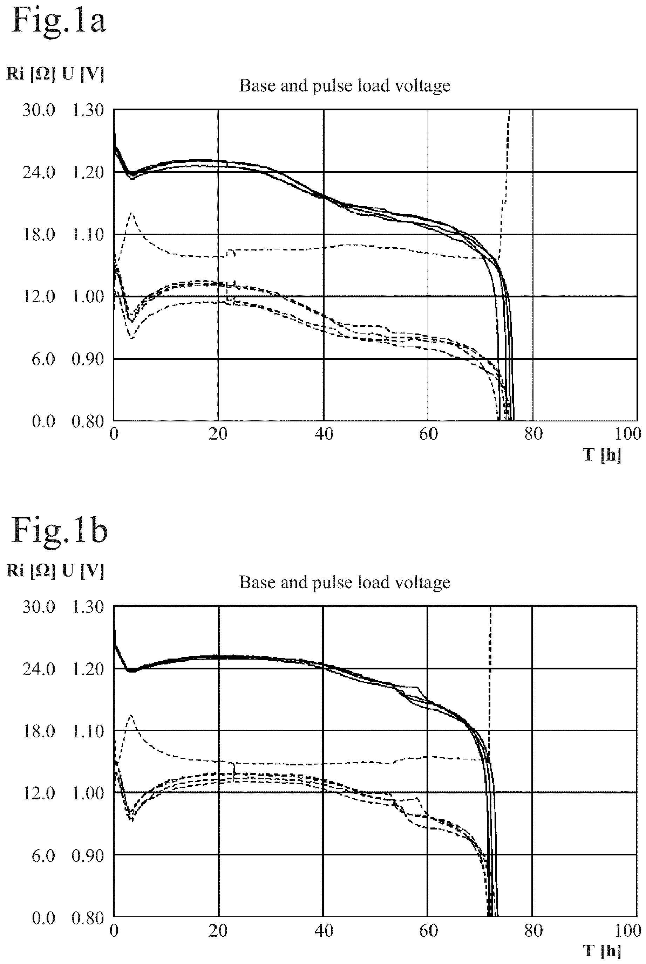

Tests mit so hergestellten Zink-Luftzellen haben ergeben, dass sich bei einer gepulsten Widerstandsentladung im Vergleich zu Referenzzellen deutlich verbesserte Spannungslagenwerte ergeben. Die Spannungsprofile einer verwendeten Zink-Luftzelle sowie einer Referenzzelle bei einer gepulsten Widerstandsentladung sind in den Figuren 1a und 1b dargestellt, wobei Figur 1a die Spannungscharakteristik der Referenzzelle, 1b die der erfindungsgemäß verwendeten Zelle abbildet.

Weiterhin zeigten die verwendeten Zellen eine deutlich verbesserte Lagerbeständigkeit: Nach einem Monat Lagerung wurden die Kapazitäten von den verwendeten Zellen gemessen:

| | | 1,10 V | | | 1,05 V | | |
|---|---|---|---|---|---|---|---|
| | Ch. | I [h] | Q [mAh] | A [mWh] | t[h] | Q [mAh] | A [mWh] |
| | 21 | 178,0 | 282,0 | 349,4 | 179,6 | 286,9 | 354,8 |
| | 22 | 192,8 | 290,5 | 359,0 | 193,9 | 293,6 | 362,5 |
| | 23 | 192,8 | 290,3 | 359,0 | 194,0 | 294,0 | 362,9 |
| | 30 | 179,7 | 287,1 | 355,2 | 193,4 | 292,3 | 360,9 |
| | 67 | 192,9 | 290,8 | 360,0 | 194,0 | 294,0 | 363,4 |
| Mean | | 187,2 | 288,1 | 356,5 | 191,0 | 292,2 | 360,9 |
| Std. dev. | | 6,9 | 3,4 | 3,9 | 5,7 | 2,7 | 3,2 |

Für Referenzzellen wurden die folgenden Vergleichswerte bestimmt:

| | | | 1,10V | | | 1,05 V | |
|---|---|---|---|---|---|---|---|
| | Ch. | t [h] | Q [mAh] | A [mWh] | t [h] | Q [mAh] | A [mWh] |
| | 73 | 170,0 | 258,0 | 319,5 | 172,0 | 264,0 | 326,2 |
| | 74 | 176,0 | 276,0 | 343,4 | 178,0 | 382,0 | 350,0 |
| | 75 | 172,0 | 264,0 | 328,6 | 174,0 | 270,0 | 335,3 |
| | 76 | 174,0 | 270,0 | 335,4 | 176,0 | 276,0 | 342,0 |
| | 77 | 172,0 | 264,0 | 327,7 | 174,0 | 270,0 | 334,4 |
| Mean | | 172,8 | 266,4 | 330,9 | 174,8 | 272,4 | 337,6 |
| Std. dev. | | 2,0 | 6,1 | 8,0 | 2,0 | 6,1 | 8,0 |

## Patentansprüche

1. Verwendung einer elektrochemischen Zelle mit einer Elektrode, die sich im Wesentlichen aus Zink oder aus einer Zinklegierung zusammensetzt und einen Anteil an Aluminiumhydroxid und/oder an mindestens einem Aluminat aufweist, zur Versorgung eines im Pulsbetrieb betriebenen elektronischen Geräts mit elektrischer Energie.

2. Verfahren zur Versorgung eines im Pulsbetrieb betriebenen elektronischen Geräts mit elektrischer Energie, **dadurch gekennzeichnet, dass** das Gerät mittels einer elektrochemischen Zelle mit elektrischer Energie gespeist wird, die eine Zinkanode aufweist, die einen Anteil an Aluminiumhydroxid und/oder an mindestens einem Aluminat aufweist.

3. Verwendung oder Verfahren nach einem der Ansprüche 1 oder 2, **dadurch gekennzeichnet, dass** die elektrochemische Zelle eine Knopfzelle ist.

4. Verwendung oder Verfahren nach einem der vorhergehenden Ansprüche, **dadurch gekennzeichnet, dass** die Elektrode neben dem Zink oder der Zinklegierung sowie dem Aluminiumhydroxid und/oder dem mindestens einen Aluminat mindestens eine der folgenden Komponenten umfasst:
a. Einen Elektrodenbinder
b. Ein leitfähigkeitsverbesserndes Additiv
c. Einen Korrosionsinhibitor

5. Verwendung oder Verfahren nach einem der vorhergehenden Ansprüche, **dadurch gekennzeichnet, dass** die Elektrode aus Zink oder der Zinklegierung die folgenden Komponenten in den folgenden Anteilen aufweist:
• das Zink und/oder die Zinklegierung in einem Anteil zwischen 95 Gew.-% und 99,5 Gew.-%,
• das Aluminiumhydroxid und/oder das mindestens eine Aluminat in einem Anteil zwischen 0,1 Gew.-% und 2 Gew.-%,
• der Elektrodenbinder in einem Anteil zwischen 0,1 Gew.-% und 2,5 Gew.-%,
• das leitfähigkeitsverbessernde Additiv in einem Anteil zwischen 0,25 Gew.-% und 2,5 Gew.-%,
• den Korrosionsinhibitor in einem Anteil zwischen 0 Gew.-% und 2,5 Gew.-%
(wobei die Anteile so aufeinander abgestimmt sind, dass sie sich insgesamt zu 100 Gew.-% aufsummieren und wobei sich alle Gewichtsangaben auf das Trockengewicht der Elektrode beziehen)

6. Verwendung oder Verfahren nach einem der vorhergehenden Ansprüche, **dadurch gekennzeichnet, dass** das mindestens eine Aluminat mindestens ein Mitglied aus der Gruppe mit Natriumaluminat, Kaliumaluminat, Calziumaluminat und Zinkaluminat umfasst.

7. Verwendung oder Verfahren nach einem der vorhergehenden Ansprüche, **dadurch gekennzeichnet, dass** die Zelle einen alkalischen Elektrolyten aufweist.

8. Verwendung oder Verfahren nach einem der vorhergehenden Ansprüche, **dadurch gekennzeichnet, dass** die Zelle eine Luftkathode, eine Silberoxid-Kathode, eine Quecksilberoxid-Kathode oder eine Wasserstoffkathode aufweist.
